# EUROPEAN PATENT APPLICATION

(11) **EP 1 204 244 A1**
(43) Date of publication of application: **08.05.2002**
(21) Application number: 01113896.3
(22) Date of filing: 08.06.2001
(51) Int. Cl.: H04L 12/28

(54) **Internet system capable of automatically selecting suitable channels**

(30) Priority: 02.11.2000 JP 2000336384
(71) Applicant: MITSUBISHI DENKI KABUSHIKI KAISHA, Tokyo 100-8310 (JP)
(72) Inventor: Fujiwara, Ryohei, Chiyoda-ku, Tokyo 100-8310 (JP)
(74) Representative: Pfenning, Meinig & Partner

(57) **Abstract**

An Internet system includes an original server (1a-1n) that transmits its contents to a platform server (3). The platform server (3) collects the contents, and broadcasts them to receivers (5a-5n) through satellite channels (13 and 13') via a communications satellite (4). When the contents transmitted from a satellite Internet subnetwork (101) includes contents requested by user terminals (6a-6n), the receivers (5a-5n) select the desired contents, and deliver them to the user terminals (6a-6n). When the contents do not include the desired contents, the receivers (5a-5n) receive them from a CATV Internet subnetwork (102) or a terrestrial Internet subnetwork (103), and delivers them. Thus, the Internet system can automatically selects the channels in response to the traffic of the channels or to the desired contents.

## Description

### BACKGROUND OF THE INVENTION

### Field of the Invention

The present invention relates to an Internet system including an Internet subnetwork using radio channels and an Internet subnetwork using cable channels.

### Description of Related Art

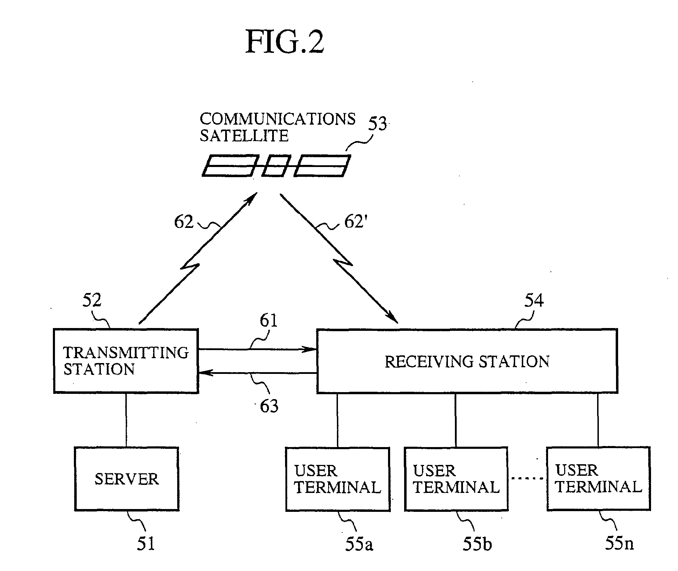

Fig. 2 is a block diagram showing a configuration of a conventional Internet system. In Fig. 2, the reference numeral 51 designates a server possessing contents such as image information; 52 designates a transmitting station for transmitting the contents the server 51 possesses via a downlink terrestrial channel 61 or satellite channels 62 and 62'; 53 designates a communications satellite for relaying the contents through the satellite channels 62 and 62'; 54 designates a receiving station for receiving the contents from the transmitting station 52; 55a, 55b, ... , 55n each designate a user terminal utilizing the contents delivered by the receiving station 54; and 63 designates an uplink terrestrial channel from the receiving station 54 to the transmitting station 52.

Next, the operation of the conventional Internet system will be described.

Designating a channel for the transmission from the transmitting station 52 to the receiving station 54, that is, the downlink terrestrial channel 61 or the satellite channels 62 and 62', the user terminal 55a requests the receiving station 54 to send the contents such as the image information via the channel, in response to which, the receiving station 54 transmits the request sent from the user terminal 55a to the transmitting station 52 via the uplink terrestrial channel 63.

The transmitting station 52 extracts the contents requested by the user terminal 55a from the server 51, and transmits them to the receiving station 54 via the downlink terrestrial channel 61 or the satellite channels 62 and 62'. The receiving station 54 receives the contents from the transmitting station 52, and delivers them to the user terminal 55a.

With the foregoing configuration, the conventional Internet system has a problem when downloading the contents the server 51 possesses to the user terminal 55a in that it sometimes cannot select the downlink terrestrial channel 61 or the satellite channels 62 and 62' specified by the user terminal 55a depending on traffic condition or desired contents.

For example, consider the case where the downlink terrestrial channel 61 is designated. In such a case, the transmitting station 52 is usually connected to a site near the receiving station 54 through a large capacity link. However, the site is often connected to the receiving station 54 through a small capacity link, which presents a problem called a "Last Mile Problem" that hinders the real time download of the desired contents when the traffic is heavy. In particular, as for the streaming contents the user terminal 55a reproduces with the download, they must be processed on real time. Otherwise, a problem arises in that the sound or images are corrupted badly.

Furthermore, when the satellite channels 62 and 62' are designated, although the contents can be broadcast to many user terminals 55a-55n simultaneously, another problem arises in that it is difficult for the transmitting station to secure sufficient capacity because of many competing satellites that utilize so called Ku band, an uplink frequency band over 14.0-14.5 GHz and a downlink frequency band over 12.25-12.75 GHz.

### SUMMARY OF THE INVENTION

The present invention is implemented to solve the foregoing problems. It is therefore an object of the present invention to provide an Internet system capable of automatically selecting either the downlink terrestrial channel 61 or the satellite channels 62 and 62' in response to the condition of the traffic of the channel or to the desired contents without requiring the user terminals 55a-55n to designate the channels.

According to a first aspect of the present invention, there is provided an Internet system comprising: a receiver for receiving contents like image information from a first Internet subnetwork using a radio channel with a broadcasting function; for selecting, when contents requested by a user terminal are included in the contents transmitted from the first Internet subnetwork, the contents requested by the user terminal from among the contents transmitted from the first Internet subnetwork; and for delivering the contents requested by the user terminal to the user terminal.

Here, when the contents requested by the user terminal are not included in the contents transmitted from the first Internet subnetwork, the receiver may change its connection to a second Internet subnetwork using wired channels, and deliver the contents requested by the user terminal to the user terminal by receiving them from the second Internet subnetwork.

The receiver may store the contents received from the first Internet subnetwork into a storage, and deliver the contents requested by the user terminal to the user terminal by retrieving them from the storage.

The receiver may store index information including titles and contents of the contents transmitted from the first Internet subnetwork into a storage.

According to a second aspect of the present invention, there is provided an Internet system comprising an original server that possesses contents like image information, that monitors an access state from a second Internet subnetwork using a wired channel, and that when the second Internet subnetwork is likely to congest, transmits contents that have been transmitted through the second Internet subnetwork via a first Internet subnetwork using a radio channel with a broadcasting function.

Here, the Internet system may further comprise a receiver for receiving the contents from the first Internet subnetwork and from the second Internet subnetwork that is likely to congest; for changing its connection to the first Internet subnetwork when contents requested by a user terminal are included in the contents transmitted from the first Internet subnetwork; for selecting the contents requested by the user terminal from the contents transmitted from the first Internet subnetwork; and for delivering the contents selected to the user terminal.

According to a third aspect of the present invention, there is provided an Internet system comprising a platform server that is connected via a network to a plurality of original servers each possessing contents like image information; and that when a second Internet subnetwork using a wired channel is likely to congest, transmits the contents, which have been transmitted by each original server via the second Internet subnetwork, via a first Internet subnetwork using a radio channel with a broadcasting function in response to a request from the original server.

The first Internet subnetwork may consist of a satellite network using a communications satellite and satellite channels .

The communications satellite and satellite channels may employ Ka band of 30 GHz/20 GHz band.

The second Internet subnetwork may consist of at least one of a cable television Internet subnetwork and a terrestrial Internet subnetwork based on dialup Internet protocol connection and leased line Internet protocol connection.

### BRIEF DESCRIPTION OF THE DRAWINGS

Fig. 1 is a block diagram showing a configuration of an embodiment 1 of the Internet system in accordance with the present invention; and
Fig. 2 is a block diagram showing a configuration of a conventional Internet system.

### DETAILED DESCRIPTION OF THE PREFERRED EMBODIMENTS

The invention will now be described with reference to the accompanying drawings.

### EMBODIMENT 1

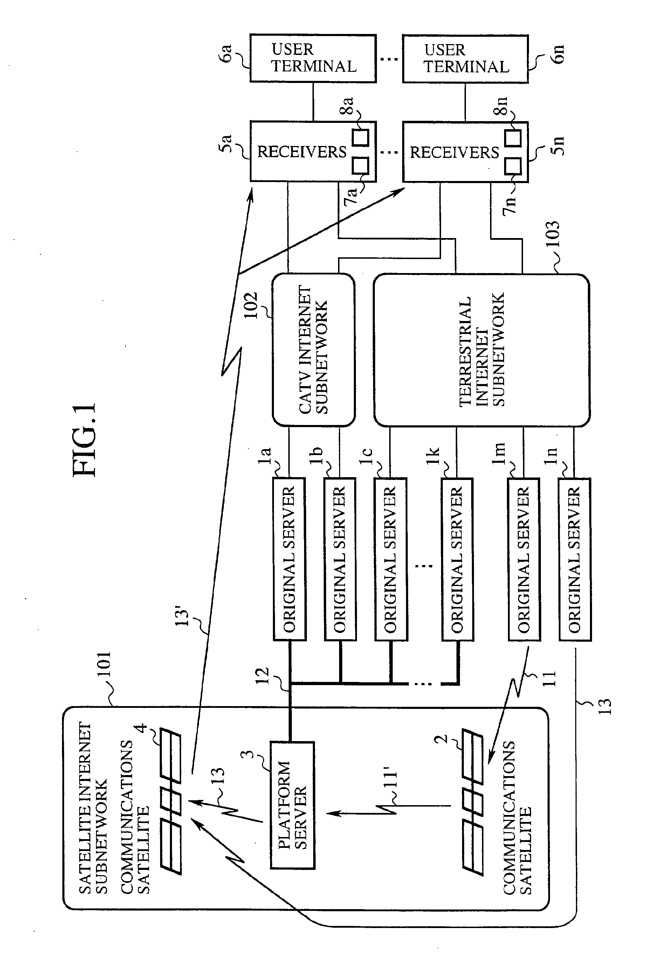

Fig. 1 is a block diagram showing a configuration of an embodiment 1 of the Internet system in accordance with the present invention. In this figure, reference numerals 1a, 1b, 1c,..., 1k, 1m and 1n designate original servers that possess contents such as image information, and are connected to a satellite Internet subnetwork 101, a CATV (Cable Television) Internet subnetwork 102 and a terrestrial Internet subnetwork 103.

The original servers 1a, 1b 1c ..., 1k, 1m and 1n are managed by a provider. Among them, the original servers 1a and 1b may be connected to the terrestrial Internet subnetwork 103, and the original servers 1c, ..., 1k, 1m and 1n may be connected to the CATV Internet subnetwork 102. The terrestrial Internet subnetwork 103 consists of an Internet subnetwork based on the dial-up IP (Internet Protocol) connection or least line IP connection.

In the satellite Internet subnetwork 101, the reference numeral 2 designates a communications satellite for relaying the contents from the original server 1m through satellite channels 11 and 11'; 3 designates a platform server that collects the contents possessed by the original servers 1a, 1b 1c, ..., 1k and 1m through the satellite channels 11 and 11' via the communications satellite 2 or terrestrial channels 12 consisting of large capacity optical fibers or the like, and stores them as a platform of the satellite Internet subnetwork 101; and 4 designates a communications satellite that relays the contents through large capacity satellite channels 13 and 13' at Ku band of 14/12 GHz or Ka band of 30/20 GHz.

Reference numerals 5a, ..., 5n designate receivers that are connected to the satellite Internet subnetwork 101 through the satellite channels 13 and 13', and to the CATV Internet subnetwork 102 and terrestrial Internet subnetwork 103 through cables, and that are selectively connected to the satellite Internet subnetwork 101, CATV Internet subnetwork 102 or terrestrial Internet subnetwork 103; and 6a, ..., 6n designate user terminals connected to the receivers 5a, ..., 5n to be utilized by users.

Next, the operation of the present embodiment 1 will be described.

The original servers 1a, 1b, 1c, ..., 1k, 1m and 1n possess broadcast contents, streaming contents like high-definition images, popular contents the users access frequently, and the like. The original server 1m transmits its contents to the platform server 3 through the satellite channels 11 and 11' via the communications satellite 2. The original servers 1a, 1b, 1c, ..., and 1k transmit their contents to the platform server 3 through the terrestrial channels 12 consisting of large capacity optical fibers.

The platform server 3 collects the contents of the original servers 1a, 1b 1c, ..., 1k and 1m through the satellite channels 11 and 11' and the terrestrial channels 12, and integrates them as the platform of the satellite Internet subnetwork 101. Then, the platform server 3 broadcasts the large capacity integrated contents to the receivers 5a-5n through the large capacity satellite channels 13 and 13' via the communications satellite 4. Thus, the platform server 3 can at once transmit the contents the original servers 1a, 1b, 1c, ..., 1k and 1m possess.

The original server In has the same function as the platform server 3. That is, it can transmits its contents to the receivers 5a-5n independently through the satellite channels 13 and 13' via the communications satellite 4.

In response to a request for desired contents sent from the user terminals 6a-6n, the receivers 5a-5n deliver, when the desired contents are present in the contents transmitted by the communications satellite 4, the desired contents to the user terminals 6a-6n by selecting the desired contents and by connecting to the satellite Internet subnetwork 101.

If the contents the communications satellite 4 transmits do not include the contents desired by the user terminals 6a-6n, the receivers 5a-5n selectively connect the CATV Internet subnetwork 102 or terrestrial Internet subnetwork 103 in response to the contents the user terminals 6a-6n require, so that the contents downloaded from the original servers 1a-1n are delivered to the user terminals 6a-6n.

The original servers 1a-1n monitor access from the CATV Internet subnetwork 102 or from the terrestrial Internet subnetwork 103. When the traffic of the CATV Internet subnetwork 102 or terrestrial Internet subnetwork 103 is likely to congest because of the large amount of access from the user terminals 6a-6n, the following steps are taken: The download of the contents with the large access amount is continued from the original servers 1a-1n to the receivers 5a-5n via the CATV Internet subnetwork 102 or the terrestrial Internet subnetwork 103. In addition, the original servers 1a-1m transmit the contents with the large access amount to the platform server 3 through the satellite channels 11 and 11' and the terrestrial channels 12, and the original server 1n transmits them to the receivers 5a-5n through the large capacity satellite channels 13 and 13' via the communications satellite 4.

The platform server 3 transmits the contents with the large access amount that are transmitted from the original servers 1a-1m to the receivers 5a-5n through the large capacity satellite channels 13 and 13' via the communications satellite 4. Monitoring the contents transmitted from the platform server 3 or from the original server 1n, and detecting the start of the download, from the satellite Internet subnetwork 101, of the contents which have been downloaded via the CATV Internet subnetwork 102 or terrestrial Internet subnetwork 103, the receivers 5a-5n change their connections to the satellite Internet subnetwork 101, and deliver the contents downloaded from the satellite Internet subnetwork 101 to the user terminals 6a-6n requesting the contents.

Although the present embodiment 1 employs the highly reliable, wide service area satellite Internet subnetwork 101 utilizing the communications satellite 4 and satellite channels 13 and 13', this is not essential. For example, it can employ the Internet subnetwork employing radio channels with a broadcasting function such as balloon-borne radio channels.

In addition, although the receivers 5a-5n select and download the contents required by the user terminals 6a-6n from the contents they receive from the communications satellite 4 in the present embodiment 1, this is not essential. For example, the receivers 5a-5n can store the contents they receive from the communications satellite 4 into storages 7a-7n such as VTRs to retrieve and deliver the contents required by the user terminals 6a-6n from the storages 7a-7n. This makes it possible for the receivers 5a-5n to deliver the desired contents to the users at any time.

Furthermore, the present embodiment 1 can also store in storages 8a-8n like a table, index information about titles or contents of the contents the receivers 5a-5n receive from the satellite Internet subnetwork 101, so that the user terminals 6a-6n can access the receivers 5a-5n to retrieve the desired contents when they can find them in the storages 8a-8n such as the table. In this case, the capacity of the storages of the receivers 5a-5n can be reduced even for the large amount of the contents, because it is unnecessary for the receivers 5a-5n to store all of the contents.

As described above, according to the present embodiment 1, it is unnecessary for the user terminals 6a-6n to designate the channels for downloading the contents because the present embodiment 1 can automatically select the satellite Internet subnetwork 101, CATV Internet subnetwork 102 or terrestrial Internet subnetwork 103 in response to the traffic condition of the channels or to the desired contents. Thus, it offers an advantage of being able to deliver the contents to the users on real time at high efficiency, and to provide the users with various services because it can employ various types of the Internet subnetworks.

Moreover, the present embodiment 1 utilizes the Ka band as the frequency band of the communications satellite 4 and satellite channels 13 and 13', which offers an advantage of being able to transmit any type of contents from the platform 3 or original server In to the receivers 5a-5n because of the large capacity of the frequency band.

## Claims

1. An Internet system comprising:
a receiver (5a-5n) for receiving contents like image information from a first Internet subnetwork (101) using a radio channel with a broadcasting function; for selecting, when contents requested by a user terminal (6a-6n) are included in the contents transmitted from said first Internet subnetwork, the contents requested by said user terminal from among the contents transmitted from said first Internet subnetwork; and for delivering the contents requested by said user terminal to said user terminal.

2. The Internet system according to claim 1, wherein when the contents requested by said user terminal are not included in the contents transmitted from said first Internet subnetwork, said receiver changes its connection to a second Internet subnetwork (102, 103) using wired channels, and delivers the contents requested by said user terminal to said user terminal by receiving them from said second Internet subnetwork.

3. The Internet system according to claim 1, wherein said receiver stores the contents received from said first Internet subnetwork into a storage (7a-7n), and delivers the contents requested by said user terminal to said user terminal by retrieving them from said storage.

4. The Internet system according to claim 1, wherein said receiver stores index information including titles and contents of the contents transmitted from said first Internet subnetwork into a storage (8a-8n).

5. An Internet system comprising an original server (1a-1n) that possesses contents like image information, that monitors an access state from a second Internet subnetwork (102, 103) using a wired channel, and that when said second Internet subnetwork is likely to congest, transmits contents that have been transmitted through said second Internet subnetwork via a first Internet subnetwork (101) using a radio channel with a broadcasting function.

6. The Internet system according to claim 5, further comprising a receiver (5a-5c) for receiving the contents from said first Internet subnetwork and from said second Internet subnetwork that is likely to congest; for changing its connection to said first Internet subnetwork when contents requested by a user terminal (6a-6n) are included in the contents transmitted from said first Internet subnetwork; for selecting the contents requested by said user terminal from the contents transmitted from said first Internet subnetwork; and for delivering the contents selected to said user terminal.

7. An Internet system comprising a platform server (3) that is connected via a network to a plurality of original servers (1a-1n) each possessing contents like image information; and that when a second Internet subnetwork (102, 103) using a wired channel is likely to congest, transmits the contents, which have been transmitted by each original server via said second Internet subnetwork, via a first Internet subnetwork (101) using a radio channel with a broadcasting function in response to a request from said original server.

8. The Internet system according to any one of claims 2, 5 and 7, wherein said first Internet subnetwork consists of a satellite network using a communications satellite (4) and satellite channels (13, 13').

9. The Internet system according to claim 8, wherein said communications satellite (4) and satellite channels (13, 13') employ Ka band of 30 GHz/20 GHz band.

10. The Internet system according to any one of claims 2, 5 and 7, wherein said second Internet subnetwork (102, 103) consists of at least one of a cable television Internet subnetwork (102) and a terrestrial Internet subnetwork (103) based on dialup Internet protocol connection and leased line Internet protocol connection.
